# EUROPEAN PATENT SPECIFICATION

(11) **EP 2 856 272 B1**
(45) Date of publication and mention of the grant of the patent: **05.08.2020**
(21) Application number: 13796838.4
(22) Date of filing: 06.05.2013
(51) Int. Cl.: G05D 1/00, B60P 1/04, B61D 11/00, G05D 1/02, E21F 13/00

(54) **DEVICE AND METHOD FOR AUTONOMOUS TRUCK USE**
VORRICHTUNG UND VERFAHREN FÜR AUTONOME VERWENDUNG EINES LASTKRAFTWAGENS
DISPOSITIF ET PROCÉDÉ D'UTILISATION DE VÉHICULE AUTONOME

(30) Priority: 28.05.2012 SE 1250537
(43) Date of publication of application: 08.04.2015
(73) Proprietor: Scania CV AB, 151 87 Södertälje (SE)
(72) Inventor: ANDERSSON, Jon, 144 62 Rönninge (SE); STENBERG, Andreas, 583 34 Linköping (SE); EKSTRÖM, Alina, 151 72 Södertälje (SE); SÖRENSEN, Josephine, 703 81 Örebro (SE)
(74) Representative: Thum, Bernhard
(86) International application number: PCT/SE2013/050499
(87) International publication number: WO 2013/180622

(56) References cited:
- EP-A2- 0 304 342
- US-A- 5 612 883
- US-A- 5 612 883
- US-A- 6 055 042
- US-A- 6 055 042
- US-A1- 2007 027 612
- US-A1- 2007 027 612
- US-B1- 6 578 925
- US-B1- 6 578 925

## Description

### TECHNICAL FIELD OF THE INVENTION

The present invention concerns a method for truck use, which truck comprises a drive unit, a power train, a chassis and a load-carrying arrangement. The invention also concerns a truck.

### BACKGROUND

Various vehicles are currently used to transport materials. For example, a number of different vehicles are used in the mining industry, such as wheel loaders, forklifts, dump trucks, remote-controlled trains and trucks.

For example, in the mining industry it is important to continuously improve work routines and develop the machinery and vehicles that are used to continually improve efficiency in order to achieve profitability within the enterprise.

A good share of the activities in the mining industry involves moving material from one place to another. Said material can consist of, for example, ore, high-value goods associated with the enrichment method, or overburden and interburden comprising materials that must be removed in order to obtain high-value goods. Waste rock in iron ore and copper mines is one example of interburden. Soil in coalmines is an example of overburden.

Trucks can be used in the mining industry to transport loads from one place to another. Trucks are considered to be flexible and efficient, and to meet many of the particular requirements to which transport vehicles within this segment are subject.

The flexibility of trucks is especially valued in operations that involve mobile loading and/or unloading. Here the loading and unloading of loads on the truck occur at sites that are not stationary. However, it should be noted that trucks are also valued transport vehicles in connection with the stationary loading and/or unloading of loads.

However, the use of trucks to transport, for example, ore is associated with certain disadvantages. One example pertains to the fact that drivers of trucks may be exposed to hazardous gases, such as methane. Furthermore, drivers of trucks may be exposed to explosive gases due to inadequate ventilation.

There are currently certain communication problems between vehicle drivers in the mining industry, which problems can entail an increased risk of traffic accidents or even pose immediate danger to people or animals located in an area where trucks are transporting, for instance, ore. In addition, the visibility in mines can be severely reduced compared with conditions on the surface during daylight.

The so-called "human factor" currently entails an increased risk of accidents, for example because a driver experiences fatigue during or toward the end of his work shift, is negatively affected by chemical substances, suffers from an acute disease condition, or has temporarily or permanently impaired mental and/or physical health in some way.

It is currently considered that so-called "downtimes" for transport vehicles, for example in connection with blasting, are too long, and that material transfer is not completely optimized. Some of said downtimes are necessary because people present in the area must not be subjected to unacceptable exposure to hazardous substances.

EP 0 304 342 A2 refers to a method and an apparatus for autonomous vehicle guidance. An autonomous vehicle comprises a robot and a storage rack with plural storage compartments, in which markers for the vehicle guidance are located. The robot is adapted to load and unload markers to and from the storage rack in order to install or uninstall the markers for the vehicle guidance.

US 6 578 925 B1 discloses a bi-directional truck for mining operations, which is remotely controlled. It is built symmetric about a plane perpendicular to the direction of forward and reverse travel. The truck comprises a combustion engine or at least one electric motor, a truck chassis and a raisable dump bed.

### SUMMARY OF THE INVENTION

There is thus a need to develop current transport vehicles in order to reduce or eliminate the aforementioned disadvantages.

One object of the present invention is to provide a new and advantageous method for truck use.

Another object of the invention is to provide a truck and a new and advantageous computer program for truck use.

Yet another object of the invention is to provide a method and a computer program for achieving cost-effective use of trucks for the transport of a load, such as ore.

Yet another object of the invention is to provide a method and a computer program to achieve the safe and punctual transport of a load, for example in a mine.

Yet another object of the invention is to provide an alternative truck for transporting a load between different sites.

At least one of said objects is achieved by a method for truck use according to claim 1. Further, at least one object is achieved by the truck according to claim 4. The dependent claims represent advantageous embodiments of the invention.

Cabs on trucks are expensive to develop, and comprise many expensive units to enable the driver to control the vehicle, and for his comfort. Truck cabs are also bulky. Developing a cabless truck offers the advantage that a more compact vehicle can be achieved. In a cables truck, the area formerly occupied by the cab can be used to provide increased load capacity by means of a larger load-carrying arrangement.

An operationally safe trucks can be achieved by providing software that makes it possible to control the truck autonomously according to stored drive routines. Furthermore, the so-called "human factor" is eliminated, which can result in a reduced risk of accidents and undesired incidents.

The method can comprise the step of:
- controlling the direction of travel of the truck by means of a steering configuration. A control unit on the vehicle can thus change a driving direction of the truck, whereupon autonomous navigation and propulsion of the truck in accordance with a desired route is achieved.

The method comprises the step of:
- sensing the surroundings of the truck as a basis for controlling the truck and its use. Correct autonomous navigation and use of the truck can be achieved thereby. The truck can thus perform tasks including loading, moving and unloading in an autonomous manner.

The method comprises the step of:
- continuously determining the position of the truck as a basis for controlling the truck and its use. A correct autonomous navigation and use of the truck can be achieved thereby. The truck can thus perform tasks including loading, moving and unloading in an autonomous manner.

The step of controlling the truck and its use includes a sequence comprising loading by means of said load-carrying arrangement, moving the loaded truck and unloading of the load. Said unloading can include tipping of the load-carrying arrangement. Said tipping can be performed autonomously.

Said unloading can include lifting the load off by means of lifting devices. Said unloading by means of lifting devices can be performed autonomously. An autonomous truck is hereby achieved that is also adapted for the loading, transport and unloading of goods that cannot be tipped off, such as pallets or packaging containing fragile items.

The truck can comprise:
- a steering configuration to control the direction of travel of the truck.

The truck comprises:
- elements for sensing the surroundings of the truck; and
- elements for controlling the truck and its use based on said sensed surroundings. The truck comprises:
- elements for continuously determining the position of the truck; and
- elements for controlling the truck and its use based on said determined position.

Controlling the truck and its use includes a sequence comprising loading by means of said load-carrying arrangement, moving the loaded truck, and unloading the load.

Said load-carrying arrangement is arranged so as to enable the tipping of at least a portion of said load.

Said load-carrying arrangement can comprise lifting devices arranged so as to load or unload a load at the truck.

Additional objects, advantages and novel features of the present invention will be apparent to one skilled in the art from the following details, and through exercising the invention. While the invention is described below, it should be clear that the invention is not limited to the specifically described details. Those skilled in the art who have access to the teaching herein will recognize additional applications, modifications and assimilations in other areas, which are within the scope of the invention.

### GENERAL DESCRIPTION OF THE DRAWINGS

For a more complete understanding of the present invention and the additional objects and advantages thereof, reference will now be made to the following detailed description, which is to be read along with the accompanying drawings, in which the same reference designations refer to the same parts in the various figures, and in which:
Figure 1 schematically illustrates a truck according to one embodiment of the invention;
Figure 2 schematically illustrates a subsystem of the truck shown in Figure 1 according to one embodiment of the invention;
Figure 3 schematically illustrates routines for truck use according to one aspect of the present invention;
Figure 4a schematically illustrates a flow diagram of a method for truck use according to one embodiment of the invention;
Figure 4b schematically illustrates, in greater detail, a flow diagram of a method for truck use according to one embodiment of the invention; and
Figure 5 schematically illustrates a computer according to one embodiment of the invention.

### DETAILED DESCRIPTION OF THE FIGURES

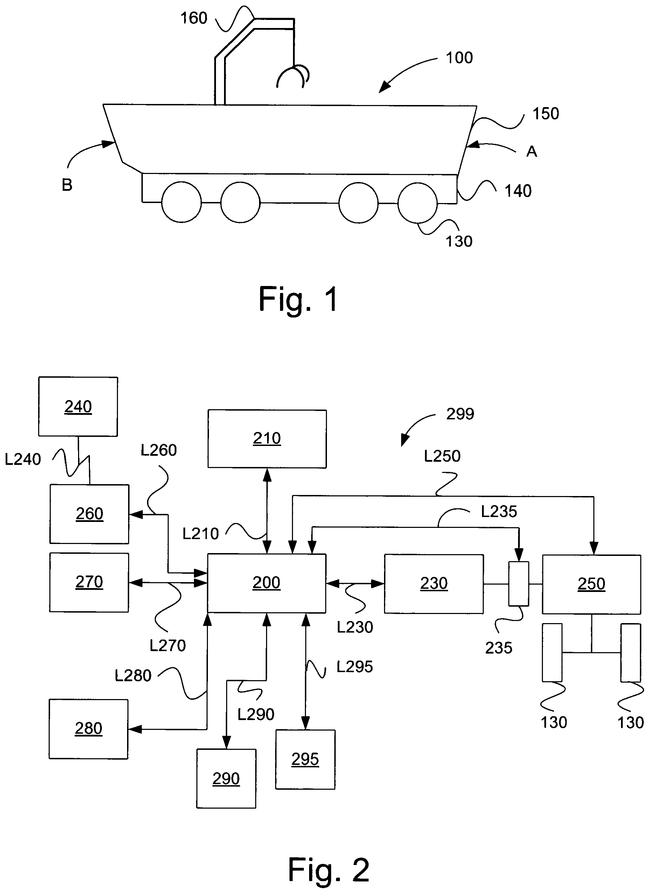

A side view of a truck according to one embodiment of the present invention is shown with reference to Figure 1. The exemplary truck 100 has a front end A and a rear end B.

The truck 100 comprises a drive unit (see Fig. 2), a power train (see Fig. 2), a chassis 140 and a load-carrying arrangement 150. The truck 100 also comprises a brake system (not shown) and a steering configuration (not shown).

The brake system is described in greater detail below. The steering configuration is arranged so as to change, in a controlled manner, the direction of travel of the truck 100. The steering configuration includes a suitable set of actuating devices, which can be of an electromechanical, pneumatic or hydraulic type.

The load-carrying arrangement 150 can be a tippable bed. Said bed can be of a conventional type. Said bed can be realized as a trough. The load-carrying arrangement 150 according to one embodiment is tippable at the rear end B of the truck. The load-carrying arrangement 150 according to one embodiment is tippable to both the one side and the other side of the truck 100.

The truck 100 according to one exemplary embodiment comprises lifting devices 160 arranged so as to load/unload loads onto/off of the load-carrying arrangement 150. Said lifting devices 160 can include a robot or autonomously controlled crane device.

The term "link" refers herein to a communication link, which can be a physical line, such as an opto-electronic communication line, or a non-physical line, such as a wireless connection, for example, a radio or microwave link.

It should be pointed out that the truck 100 is an autonomous truck. As Figure 1 shows, the truck is a cablessly arranged truck. By providing a cabless and autonomously controlled truck, a number of the advantages described herein can be achieved.

A subsystem 299 of the autonomous truck 100 is shown with reference to Figure 2. The subsystem 299 is arranged on said chassis 140 of the truck 100. The subsystem 299 comprises a first control unit 200.

According to one embodiment, the first control unit 200 is arranged so as to communicate with an engine 230 via a link L230. The first control unit 200 is arranged so as to control the operation of the vehicle engine 230. The engine 230 can be a combustion engine or an electric engine. The engine 230 can be referred to as a drive unit. According to one embodiment, the truck 100 is a hybrid vehicle, wherein the drive unit 230 comprises, for example, a combustion engine, an electric engine and an energy storage device.

Said engine 230 is arranged so as to transfer a torque to an automatic transmission 250 via an output shaft of the engine 230. The first control unit 200 is arranged so as to communicate with the transmission 250 via a link L250. The first control unit 200 is arranged so as to control the transmission 250. The first control unit 200 is arranged so as to shift a gear in said transmission 250 in accordance with drive routines stored in a memory in the control unit 200.

The first control unit 200 is arranged so as to communicate with a clutch configuration 235 via a link L235. The first control unit 200 is arranged so as to control the clutch configuration 235. The first control unit 200 is arranged so as to influence the clutch configuration 235 in a suitable manner while controlling the transmission 250. The clutch configuration 235 can be arranged in integrated fashion in the transmission 250 in the form of a torque converter.

The vehicle power train comprising the clutch configuration and transmission is arranged so as to transfer a torque to drive wheels 130 of the truck 100. The truck 100 can have a suitable number of drive wheels 130, such as 2, 4, 6 or 8 drive wheels.

The truck is arranged with a brake system (not shown). The first control unit 200 is arranged so as to control said brake system by means of suitable actuating elements. The brake system can be a pneumatic, hydraulic, mechanical or electronic brake system.

The first control unit 200 is arranged so as to control said steering configuration. The ability is thereby achieved to continuously change the direction of travel of the truck 100 in a suitable manner, and thus to turn to the right or left in a direction of travel. Said direction of travel can apply in both a forward direction (end A) and a reverse direction (end B). It should be noted that an autonomous truck without a cab or driver can be used just as effectively regardless of whether the vehicle is driven with end A or end B first. Given a suitable design of, for example, the vehicle power train, the truck 100 can be driven autonomously in essentially the same manner in either direction. Here the vehicle power train can, for example, be arranged with the same possible gears in both driving directions.

A communication unit 260 is arranged so as to communicate with the first control unit 200 via a link L260. The communication unit 260 is arranged so as to communicate with a control center 240 via a link L240. Said communication unit 240 can communicate, for example, by means of radio waves or microwaves. According to one embodiment, the autonomous truck can communicate with the control center 240 via a WLAN.

A first sensor device 270 is arranged so as to communicate with the first control unit 200 via a link L270. The first sensor device can comprise one or a plurality of video cameras. The first sensor device can comprise one or a plurality of IR cameras. The first sensor device 270 is arranged so as to continuously communicate images of the surroundings of the truck to the first control unit 200 via the link L270. The first control unit 200 is arranged so as to process the received images in order to create a surroundings image.

The first control unit 200 can, by means of an integrated image-processing program, determine whether, for example, an obstacle lies ahead. The first control unit 200 can, by means of said integrated image-processing program, determine whether danger to surrounding people or animals is present. If such is the case, appropriate actions can be taken in the form of, for example, an evasive maneuver or braking.

The first control unit 200 can, by means of said integrated image-processing program, determine the position of the truck in relation to, for example, a loading and unloading device (such as a silo or crusher), a tip site for mobile unloading or walls in mine tunnels. The first control unit 200 is arranged so as to control the operation, e.g. loading, unloading and navigation of the truck 100 based on the images generated by the first sensor device 270.

A second sensor device 280 is arranged so as to communicate with the first control unit 200 via a link L280. The second sensor device 280 can comprise one or a plurality of radar units. The second sensor device 280 is arranged so as to continuously communicate information about the surroundings of the truck to the first control unit 200 via the link L280. The first control unit 200 is arranged so as to process the received radar information in order to create a surroundings image.

The first control unit 200 can, by means of an integrated radar information model, determine whether, for example, an obstacle lies ahead. The first control unit can, by means of said integrated radar information model, determine whether danger to surrounding people or animals is present. If such is the case, appropriate actions can be taken in the form of, for example, an evasive maneuver or braking.

The first control unit 200 can, by means of said integrated radar information model, determine the position of the truck in relation to a loading or unloading device (such as a silo or crusher), a tip site for mobile unloading or walls in mine tunnels. The first control unit 200 is arranged so as to control operations, such as loading, unloading and navigation of the truck 100 based on information from the second sensor device 280. According to one exemplary embodiment, the second sensor device 280 can detect, for example, roadside posts, whereupon the first control unit 200 is arranged so as to navigate on the basis of information derived thence.

The subsystem 299 comprises a positioning unit 290. The positioning unit 290 can comprise a GPS unit. The positioning unit 290 is arranged so as to determine a prevailing position of the truck 100. The positioning unit 290 is arranged so as to communicate with the first control unit 200 via a link L290. The positioning unit 290 is arranged so as to continuously send information about a prevailing position of the truck 100 to the first control unit 200 via the link L290. The first control unit 200 is, according to one embodiment, arranged so as to continuously send information about a prevailing position of the truck 100 to the control center 240 by means of the communication unit 260.

A third sensor device 295 is arranged so as to communicate with the first control unit 200 via a link L295. The third sensor device 295 can comprise one or a plurality of laser units. The third sensor device 295 is arranged so as to continuously communicate information about the surroundings of the truck to the first control unit 200 via the link L295. The first control unit 200 is arranged so as to process the received laser information in order to create a surroundings image.

The first control unit 200 can, by means of an integrated laser information model, determine whether, for example, an obstacle lies ahead. The first control unit 200 can, by means of said integrated laser information model, determine whether danger to surrounding people or animals is present. If such is the case, appropriate actions can be taken in the form of, for example, an evasive maneuver or braking.

The first control unit 200 can, by means of said integrated laser information model, determine the position of the truck in relation to, for example, a loading or unloading device (such as a silo or crusher), a tip site for mobile unloading or walls in mine tunnels. The first control unit 200 is arranged so as to control operations comprising, for example, loading, unloading and navigation of the truck 100 based on information from the third sensor device 295.

According to one embodiment, the third sensor device 295 can passively detect laser sound from stationary laser devices. The first control unit 200 can then be arranged so as to determine a prevailing absolute position of the truck 100. The first control unit 200 can then be arranged so as to determine a prevailing position for the truck 100 in relation to, for example, a loading or unloading site.

According to one example, the control center 240 can be a manned control center where one or a plurality of operators can manage and monitor a fleet of autonomous trucks. The control center can then send information via the link L240, which information contains commands to start the truck 100, operate the truck in accordance with a predetermined routine stored in the truck 100, and shut off the truck 100.

The control center 240 can, where appropriate, send information about updates of tasks, maps etc to the truck 100. The truck 100 is itself arranged so as, where appropriate, to send information about updates of tasks, maps etc to the control center 240. The control center 240 can thereby forward said communicated information to other autonomous truck in the truck fleet.

A second control unit 210 is arranged so as to communicate with the first control unit 200 via a link L210. The second control unit 210 can be removably connected to the first control unit 200. The second control unit 210 can be a control unit that is external to the truck 100. The second control unit 210 can be arranged so as to perform the innovative method steps according to the invention. The second control unit 210 can be used to load software into the first control unit 200, particularly software for performing the innovative method. The second control unit 210 can alternatively be arranged so as to communicate with the first control unit 200 via an internal network in the vehicle. The second control unit 210 can be arranged so as to perform essentially the same functions as the first control unit 200.

A map model can be stored in a memory in the first control unit 200. Said map model can be dynamic to the extent that it is continuously updatable. The map model can be updated based on information that is detected/determined by any of, for example, the units 260, 270, 280, 290 and 295. Alternatively, the map model can be updatable based on information that is received from the control center 240 by means of the unit 260.

Said map model can contain information about a number of different loading sites and unloading sites, and about various routes between said sites. Furthermore, said map model can contain information about the terrain, lateral obstacles, identifiable objects with determined positions, etc for use in navigating and driving the truck 100.

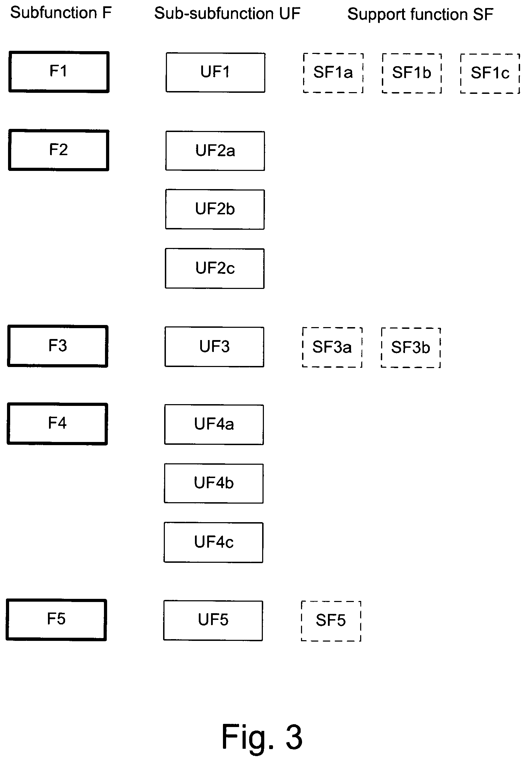

Figure 3 schematically illustrates an example of one main function of the autonomous truck 100, which truck 100 is arranged cablessly.

A number of main functions can be stored in a memory in the first control unit 200.

Examples of main functions can comprise:
1. Start the truck;
2. Perform self-diagnostics of the truck;
3. Taxi out from a motor pool;
4. Perform tasks, including "moving material";
5. Return to a motor pool.

Each main function comprises a number of subfunctions F. Each subfunction F comprises at least one sub-subfunction UF. Each sub-subfunction UF comprises at least one support function SF.

A general description of the main function "move material" is provided below.

The main function comprises the subfunctions:
F1) plan route;
F2) drive the truck to the loading site;
F3) permit loading;
F4) drive the truck to the unloading site; and
F5) permit unloading.

The subfunction F1 (plan route) comprises the sub-subfunction "identify route" (UF1), which in turn comprises the support functions "identify loading site" (SF1a), "identify unloading site" (SF1b) and "optimize route" (SF1c).

The subfunction F2 (drive the truck to the loading site) comprises the sub-subfunctions "permit departure" (UF2a), "maintain navigation" (UF2b) and "give notice of arrival" (UF2c).

The subfunction F3 (permit loading) comprises the sub-subfunction "support loader" (UF3), which in turn comprises the support functions "adjust loading position" (SF3a) and "hold load" (SF3b).

The subfunction F4 (drive the truck to the unloading site) comprises the sub-subfunctions "permit departure" (UF4a), "maintain navigation" (UF4b) and "give notice of arrival" (UF4c).

The subfunction F5 (permit unloading) comprises the sub-subfunction "permit position change" (UF5), which in turn comprises the support function "unload load" (SF5).

All the foregoing steps are considered here to be self-explanatory, and no detailed description is provided in connection therewith. The control center 240 can thus be arranged so as to communicate which main function the truck 100 is to perform autonomously.

Higher-order functions are included for certain main functions, such as "maintain orientation of the truck," "permit maneuvering" and "manage deviations."

Continuous updating of the truck 100 with regard to its own position to enable the vehicle to maintain its location is achieved by means of the "maintain orientation of the truck" function. In order for the truck to be able to change its direction of travel and velocity, and to maneuver the load-carrying arrangement 150, continuous maneuvering should be permitted. Upon the occurrence of, for example, obstacles or changes in the surroundings of the truck, the truck is thus arranged so as to be able to manage deviations, which is particularly advantageous from a safety perspective.

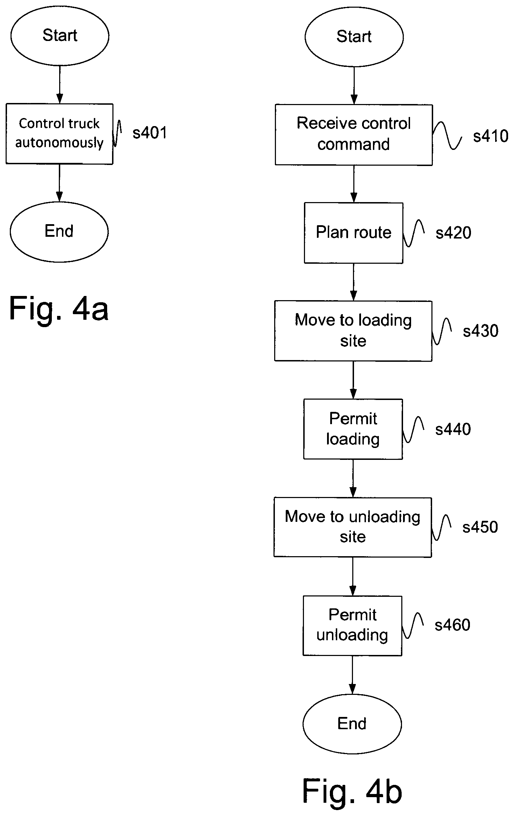

Figure 4a schematically illustrates a flow diagram of a method for truck use, which truck comprises a drive unit, a chassis and a load-carrying arrangement according to one embodiment of the invention. The method comprises a first method step s401. The step s401 comprises the steps of:
- providing said truck without either driver cab or onboard operator;
- controlling the truck and its use by means of at least one control unit. The method is concluded after the step s401.

Figure 4b schematically illustrates a flow diagram of a method for truck use, which truck comprises a drive unit, a power train, a chassis and a load-carrying arrangement according to one aspect of the present invention.

The method comprises a first method step s410. The method step s410 comprises the step of receiving a control command from the control center 240. Said control command can contain information indicating that a main function is to be performed. According to this example, the main function "move material" is received. After the method step s410, a subsequent method step s420 is performed.

The method step s420 comprises the step of planning a route (F1). After the method step s420, a subsequent method step s430 is performed.

The method step s430 comprises the step of driving the truck to a loading site (F2). After the method step s430, a subsequent method step s440 is performed.

The method step s440 comprises the step of permitting loading (F3). After the method step s440, a subsequent method step s450 is performed.

The method step s450 comprises the step of driving the truck to an unloading site (F4). After the method step s450, a subsequent method step s460 is performed.

The method step s460 comprises the step of permitting unloading (F5). After the method step s460, the method is concluded.
The higher-order functions "maintain orientation of the truck," "permit maneuvering" and "manage deviations" are also used in connection with the method steps s430-s460." All applicable steps specified in dependent claims 2-3 are included during the execution of these functions.

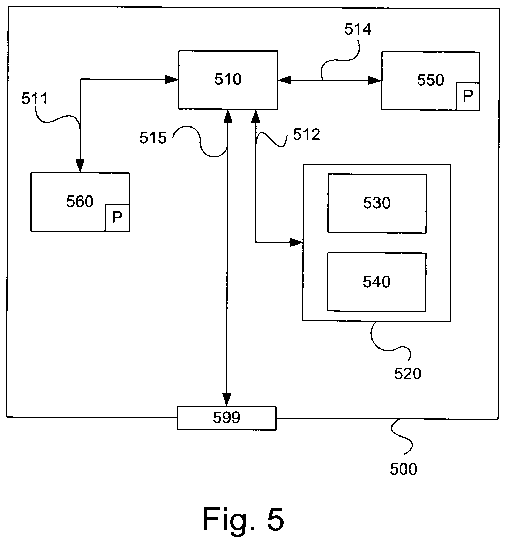

A diagram of an embodiment of a device 500 is shown with reference to Figure 5. The control units 200 and 210 as described with reference to Figure 2 can, in one embodiment, include the device 500. The device 500 comprises a non-volatile memory 520, a data-processing unit 510 and a read/write memory 550. The non-volatile memory 520 has a first memory section 530 in which a computer program, such as an operating system, is stored for controlling the function of the device 500. The device 500 further comprises a bus controller, a serial communication port, I/O elements, an A/D converter, a time and date input and transfer unit, an event counter and a termination controller (not shown). The non-volatile memory 520 also has a second memory section 540.

A computer program P is hereby provided that comprises routines for autonomously controlling a cabless truck according to the innovative method.

The program P comprises routines for controlling the truck in accordance with a number of main functions, such as the main functions 1-5 described above. The program P comprises routines for controlling the vehicle in accordance with a number of subfunctions, such as the subfunctions F1-F5 described above. The program P comprises routines for controlling the direction of travel of the truck 100 by means of the steering configuration. The program P comprises routines for sensing the surroundings of the truck 100 as a basis for controlling the truck and its use. The program P comprises routines for continuously determining the position of the truck as a basis for controlling the truck and its use. The program P comprises routines for controlling the truck 100 and its use in accordance with a sequence comprising loading by means of said load-carrying arrangement, driving of the loaded truck and unloading of the load. The program P comprises routines for controlling the lifting device 160 in order to load and/or unload a load at the load-carrying arrangement 150.

The program P can be stored in executable form or in compressed form in a memory 560 and/or in a read/write memory 550.

When it is stated that the data-processing unit 510 performs a certain function, this is to be understood to mean that the data-processing unit 510 executes a certain part of the program that is stored in the memory 560, or a certain part of the program that is stored in the read/write memory 550.

The data-processing device 510 can communicate with a data port 599 via a data bus 515. The non-volatile memory 520 is intended to communicate with the data-processing unit 510 via a data bus 512. The separate memory 560 is intended to communicate with the data-processing unit 510 via a data bus 511. The read/write memory 550 is arranged so as to communicate with the data-processing unit 510 via a data bus 514. For example, the links L210, L230; L235, L250, L260, L270, L280, L290 and L295 can be connected to the data port 599 (see Figure 2).

When data are received at the data port 599, they are stored temporarily in the second memory section 540. Once received input data have been stored temporarily, the data-processing unit 510 is arranged so as to perform the execution of code in a manner as described above. According to one embodiment, signals received at the data port 599 contain information from the control center 240, and the units 260, 270, 280, 290 and 295. The signals received at the data port 599 can be used by the device 500 to control the truck 100 autonomously.

Parts of the methods described herein can be performed by the device 500 with the help of the data-processing unit 510, which runs the program stored in the memory 560 or the read/write memory 550. The methods described herein are executed when the device 500 runs the program.

The present description of the preferred embodiments of the present invention has been provided for the purpose of illustrating and describing the invention. It is not intended to be exhaustive, or to limit the invention to the variants described. Obviously many modifications and variations will be apparent to one skilled in the art. The embodiments have been chosen and described in order to best explain the principles of the invention and its practical applications, and thus to enable one skilled in the art to understand the invention with regard to its various embodiments and the various modifications that are applicable to its intended use.

## Claims

1. A method for truck use, which truck (100) comprises a drive unit (230), a power train (235, 250, 130), a chassis (140) and a load-carrying arrangement (150), wherein the method comprises the steps of:
- providing said truck (100) without either driver cab or onboard operator and with a load carrying arrangement comprising a tippable trough;
- sensing the surroundings of the truck (100);
- continuously determining the position of the truck by means of a GPS unit; and
- controlling the truck (100) and its use autonomously based on the sensed surroundings of the truck (100) and based on the continuously determined position of the truck (100),
wherein the truck (100) and its use is autonomously controlled by means of at least one control unit (200; 210; 500) according to drive routines stored in the control unit (200; 210; 500), wherein the control unit (200; 210; 500) is installed on said truck (100),
wherein the step of controlling the truck (100) and its use includes a sequence comprising
- loading by means of said load-carrying arrangement (150),
- moving the loaded truck (100) and
- unloading the load.

2. A method according to claim 1, comprising the step of:
- controlling the direction of travel of the truck (100) by means of a steering configuration (200; 210; 500).

3. A method according to any of the proceeding claims, wherein said unloading includes tipping of the load-carrying arrangement (150) or wherein said unloading includes lifting loads off by means of lifting devices (160) comprised in said load-carrying arrangement (150).

4. A truck (100) comprising a drive unit (230), a power train (235,250, 130), a chassis (140) and a load-carrying arrangement (150), further comprising:
- elements (260; 270; 280; 290; 295) for sensing the surroundings of the truck;
- elements (200; 210; 500) for controlling the truck (100) and its use based on said sensed surroundings;
- elements (260; 270; 280; 290; 295) comprising a GPS unit for continuously determining the position of the truck;
- elements (200; 210; 500) for controlling the truck and its use based on said determined position;
- elements (200; 210; 500) comprised by the truck (100) for autonomous control of the truck (100) and its use, wherein the autonomous control is in accordance to drive routines stored in these elements (200; 210; 500); and
- elements controlling the truck (100) and its use according to a sequence comprising loading by means of said load-carrying arrangement (150), moving of the loaded truck (100) and unloading of the load,
wherein the truck (100) is arranged without either a driver cab or an onboard operator and
wherein the load-carrying arrangement (150) comprises a tippable trough.

5. A truck according to claim 4, comprising:
- a steering configuration (200; 210; 500) for controlling the direction of travel of the truck.

6. A truck according to claim 4 or 5, wherein said load-carrying arrangement (150) is arranged so as to tip off at least a portion said load.

7. A truck according to one of claims 4 to 6, wherein said load-carrying arrangement (150) comprises lifting devices (160) arranged so as to load or unload loads at the truck (100).

## Patentansprüche

1. Verfahren zur Verwendung eines Lastkraftwagens, wobei der Lastkraftwagen (100) eine Antriebseinheit (230), einen Antriebsstrang (235, 250, 130), ein Fahrgestell (140) und eine ladungstragende Anordnung (150) umfasst, wobei das Verfahren die Schritte umfasst:
- Bereitstellen des Lastkraftwagens (100) ohne eine Fahrerkabine oder einen Fahrer an Bord und mit einer ladungstragenden Anordnung, die eine kippbare Mulde umfasst;
- Erfassen der Umgebung des Lastkraftwagens (100);
- Kontinuierliches Bestimmen der Position des Lastkraftwagens mittels einer GPS Einheit; und
- Steuern des Lastkraftwagens (100) und dessen Nutzung autonom basierend auf der erfassten Umgebung des Lastkraftwagens (100) und basierend auf der kontinuierlich bestimmten Position des Lastkraftwagens (100),
wobei der Lastkraftwagen (100) und dessen Nutzung autonom gesteuert wird mittels wenigstens einer Steuereinheit (200; 210; 500) entsprechend Fahrroutinen, die in der Steuereinheit (200; 210; 500) gespeichert sind, wobei die Steuereinheit (200; 210; 500) auf dem Lastkraftwagen (100) installiert ist,
wobei der Schritt des Steuerns des Lastkraftwagens (100) und dessen Nutzung eine Sequenz umfasst, die umfasst
- Beladen mittels der ladungstragenden Anordnung (150),
- Bewegen des beladenen Lastkraftwagens (100) und
- Entladen der Ladung.

2. Verfahren nach Anspruch 1, umfassend den Schritt:
- Steuern der Fahrtrichtung des Lastkraftwagens (100) mittels einer Lenkkonfiguration (200; 210; 500).

3. Verfahren nach einem der vorangehenden Ansprüche, wobei das Entladen ein Kippen der ladungstragenden Anordnung (150) umfasst oder wobei das Entladen ein Herunterheben von Ladung mittels Hebevorrichtungen (160) umfasst, die in der ladungstragenden Anordnung (150) umfasst sind.

4. Lastkraftwagen (100), umfassend eine Antriebseinheit (230), einen Antriebsstrang (235, 250, 130), ein Fahrgestell (140) und eine ladungstragende Anordnung (150), ferner umfassend:
- Elemente (260; 270; 280; 290; 295) zum Erfassen der Umgebung des Lastkraftwagens;
- Elemente (200; 210; 500) zum Steuern des Lastkraftwagens (100) und dessen Nutzung basierend auf der erfassten Umgebung;
- Elemente (260; 270; 280; 290; 295) umfassend eine GPS Einheit zum kontinuierlichen Bestimmen der Position des Lastkraftwagens;
- Elemente (200; 210; 500) zum Steuern des Lastkraftwagens und dessen Nutzung basierend auf der bestimmten Position;
- Elemente (200; 210; 500) umfasst von dem Lastkraftwagen (100) zum autonomen Steuern des Lastkraftwagens (100) und dessen Nutzung, wobei die autonome Steuerung entsprechend Fahrroutinen stattfindet, die in den Elementen (200; 210; 500) gespeichert sind; und
- Elemente, die den Lastkraftwagen (100) und dessen Nutzung entsprechend einer Sequenz steuern, die Beladen mittels der ladungstragenden Anordnung (150), Bewegen des Lastkraftwagens (100) und Entladen der Ladung umfasst,
wobei der Lastkraftwagen (100) ohne eine Fahrerkabine oder einen Fahrer an Bord vorgesehen ist und
wobei die ladungstragende Anordnung eine kippbare Mulde umfasst.

5. Lastkraftwagen nach Anspruch 4, umfassend:
- eine Lenkkonfiguration (200; 210; 500) zum Steuern der Fahrtrichtung des Lastkraftwagens (100).

6. Lastkraftwagen nach einem der Ansprüche 4 oder 5, wobei die ladungstragende Anordnung (150) dazu eingerichtet ist, zumindest einen Teil der Ladung abzukippen.

7. Lastkraftwagen nach einem der Ansprüche 4 bis 6, wobei die ladungstragende Anordnung (150) Hebevorrichtungen (160) umfasst, die dazu eingerichtet sind, Ladungen an dem Lastkraftwagen (100) zu laden oder zu entladen.

## Revendications

1. Procédé d'utilisation de camion, lequel camion (100) comprend une unité d'entraînement (230), un groupe motopropulseur (235, 250, 130), un châssis (140) et un agencement de transport de charge (150), dans lequel le procédé comprend les étapes de :
- prévision dudit camion (100) sans cabine de conduite ou sans opérateur embarqué et avec un agencement de transport de charge comprenant une benne basculante ;
- détection des environs du camion (100) ;
- détermination en continu de la position du camion au moyen d'une unité GPS ; et
- commande du camion (100) et de son utilisation de façon autonome sur la base des environs détectés du camion (100) et sur la base de la position déterminée en continu du camion (100),
dans lequel le camion (100) et son utilisation sont commandés de façon autonome au moyen d'au moins une unité de commande (200 ; 210 ; 500) conformément à des routines de conduite stockées dans l'unité de commande (200 ; 210 ; 500), dans lequel l'unité de commande (200 ; 210 ; 500) est installée sur ledit camion (100),
dans lequel l'étape de commande du camion (100) et de son utilisation inclut une séquence comprenant
- le chargement au moyen dudit agencement de transport de charge (150),
- le déplacement du camion (100) chargé et
- le déchargement de la charge.

2. Procédé selon la revendication 1, comprenant l'étape de :
- commande du sens de déplacement du camion (100) au moyen d'une configuration de direction (200 ; 210 ; 500).

3. Procédé selon l'une quelconque des revendications précédentes, dans lequel ledit déchargement inclut le basculement de l'agencement de transport de charge (150) ou dans lequel ledit déchargement inclut le levage de charges au moyen de dispositifs de levage (160) compris dans ledit agencement de transport de charge (150).

4. Camion (100) comprenant une unité d'entraînement (230), un groupe motopropulseur (235, 250, 130), un châssis (140) et un agencement de transport de charge (150), comprenant en outre :
- des éléments (260 ; 270 ; 280 ; 290 ; 295) pour détecter les environs du camion ;
- des éléments (200 ; 210 ; 500) pour commander le camion (100) et son utilisation sur la base desdits environs détectés ;
- des éléments (260 ; 270 ; 280 ; 290 ; 295) comprenant une unité GPS pour déterminer en continu la position du camion ;
- des éléments (200 ; 210 ; 500) pour commander le camion et son utilisation sur la base de ladite position déterminée ;
- des éléments (200 ; 210 ; 500) compris par le camion (100) pour une commande autonome du camion (100) et de son utilisation, dans lequel la commande autonome est conforme à des routines de conduite stockées dans ces éléments (200 ; 210 ; 500) ; et
- des éléments commandant le camion (100) et son utilisation conformément à une séquence comprenant le chargement au moyen dudit agencement de transport de charge (150), le déplacement du camion (100) chargé et le déchargement de la charge,
dans lequel le camion (100) est agencé sans cabine de conduite ou sans opérateur embarqué et
dans lequel l'agencement de transport de charge (150) comprend une benne basculante.

5. Camion selon la revendication 4, comprenant :
- une configuration de direction (200 ; 210 ; 500) pour commander le sens de déplacement du camion.

6. Camion selon la revendication 4 ou 5, dans lequel ledit agencement de transport de charge (150) est agencé de façon à décharger par basculement au moins une partie de ladite charge.

7. Camion selon l'une des revendications 4 à 6, dans lequel ledit agencement de transport de charge (150) comprend des dispositifs de levage (160) agencés de façon à charger ou décharger des charges dans le ou du camion.
